# EUROPÄISCHE PATENTSCHRIFT

(11) **EP 2 522 101 B1**
(45) Veröffentlichungstag und Bekanntmachung des Hinweises auf die Patenterteilung: **14.01.2015**
(21) Anmeldenummer: 11704056.8
(22) Anmeldetag: 14.02.2011
(51) Int. Cl.: H04L 9/32, H04L 29/06

(54) **VERFAHREN ZUR SICHEREN UNIDIREKTIONALEN ÜBERTRAGUNG VON SIGNALEN**
METHOD FOR THE SECURE UNIDIRECTIONAL TRANSMISSION OF SIGNALS
PROCÉDÉ POUR LE TRANSFERT UNIDIRECTIONNEL SÛR DE SIGNAUX

(30) Priorität: 11.03.2010 DE 102010011022
(43) Veröffentlichungstag der Anmeldung: 14.11.2012
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2011/052103
(87) Internationale Veröffentlichungsnummer: WO 2011/110402

(56) Entgegenhaltungen:
- EP-A2- 0 898 216
- WO-A2-2009/158086
- US-A1- 2009 235 083
- US-A1- 2010 011 220
- DIMITRIOU T: "A Lightweight RFID Protocol to protect against Traceability and Cloning attacks", SECURECOMM2005, IEEE, 5 September 2005 (2005-09-05), pages 59-66, XP010902872, DOI: 10.1109/SECURECOMM.2005.4 ISBN: 978-0-7695-2369-9

## Beschreibung

Die Erfindung betrifft ein Verfahren, einen Sender und einen Empfänger zur sicheren unidirektionalen Übertragung eines Signals unter Verwendung eines asymmetrischen Kryptographieverfahrens.

Unidirektionale Übertragungen von Signalen werden beispielsweise bei Fernbedienungen zum Aussenden eines Steuerkommandos verwendet, da in diesen Fällen üblicherweise keine Antwortnachricht benötigt wird. Beispiele für derartige Fernbedienungen sind Funkschlüssel zum Ver- und Entriegeln von Autos, drahtlose Garagentoröffner oder Fernbedienungen im Unterhaltungselektronikbereich. Weiterhin werden beispielsweise Statusinformationen, wie Temperatur oder Erschütterung, von drahtlosen Sensoren unidirektional übertragen. Eine solche unidirektionale Übertragung ist energiesparend, da lediglich eine einzelne Nachricht ausgesendet wird und vorab keine Verbindung aufgebaut werden muss. Zudem kann üblicherweise auf ein Empfangsteil verzichtet werden, was die entsprechenden Systeme preiswert in der Herstellung macht.

Auch bei einer unidirektionalen Übertragung besteht jedoch in den meisten Anwendungsfällen die Anforderung einer sicheren und manipulationsgeschützten Übertragung der Signale. Zur sicheren unidirektionalen Übertragung ist das so genannte Keeloq-Protokoll bekannt. In diesem Protokoll wird ein symmetrischer Schlüssel zur Verschlüsselung der gesendeten Signale verwendet. In einem symmetrischen Verschlüsselungsverfahren müssen Sender und Empfänger über den gleichen Schlüssel verfügen, damit der Sender die Nachricht mit diesem verschlüsseln und der Empfänger die Nachricht mit diesem entschlüsseln kann. Um einen neuen Sender bei einem Empfänger bekannt zu machen, müssen daher in einem geeigneten Verfahren ein spezifischer symmetrischer Schlüssel zwischen Sender um Empfänger vereinbart werden. In der Praxis werden Verfahren verwendet, bei dem ein symmetrischer Systemschlüssel beim Empfänger durch den Hersteller gespeichert wird. Anhand einer senderspezifischen Information, wie beispielsweise einer Seriennummer, kann dann ein senderspezifischer Schlüssel durch den Empfänger berechnet werden. Hierzu überträgt der Sender in einer Anlernphase beispielsweise seine Seriennummer an den Empfänger, welcher daraufhin mit Hilfe des Systemschlüssels den senderspezifischen Schlüssel ermittelt. Auf Seiten des Senders ist der senderspezifische Schlüssel bereits durch den Hersteller gespeichert. Somit verfügen sowohl der Sender als auch der Empfänger nach dieser Anlernphase über einen gemeinsamen Schlüssel, mit dem die Nachrichten verschlüsselt beziehungsweise entschlüsselt werden können.

Problematisch bei einem solchen Verfahren ist jedoch, dass auf jedem Empfänger der Systemschlüssel hinterlegt ist. Ein Angreifer, der im Besitz nur eines Empfängers ist, kann den Systemschlüssel auslesen und mit diesem Wissen die Schlüssel eines beliebigen Senders nachbilden.

In einem weiteren Verfahren wird zur Vereinbarung eines symmetrischen Schlüssels zwischen Sender und Empfänger der Senderschlüssel in einer Anlernphase unverschlüsselt übertragen. Auch diese birgt jedoch die Gefahr, dass ein Angreifer in einer manipulierten Anlernphase den Senderschlüssel abhört.

Hiervon abgesehen ist in beiden Verfahren eine Anlernphase zu durchlaufen, die durch den Benutzer zu initiieren ist. Dies ist mit einem zusätzlichen Aufwand für den Benutzer verbunden, so dass die beschriebenen Verfahren durch die zusätzlich erforderliche Anlernphase fehleranfälliger und benutzerunfreundlicher werden.

Die Dokumente A. Menezes, P. van Oorschot, S. Vanstone: "Handbook of Applied Cryptography", CRC Press, 1997, Seiten 385 bis 435, und J. Clark, J. Jacob: "A Survey of Authentication Protocol Literature: Version 1.0", 17. November 1997, beschreiben eine unilaterale Authentisierung zwischen einem Sender und einem Empfänger. Im Rahmen dieser Authentisierung wird ein Zeitstempel und eine Empfängeridentifikation sowie eine digitale Signatur übermittelt, welche über den Zeitstempel und die Empfängeridentifikation gebildet ist. Der Empfänger kann dabei die Korrektheit des Zeitstempels sowie über den öffentlichen Schlüssel des Senders die Korrektheit der Signatur überprüfen.

In der Druckschrift US 7,278,582 B1 wird ein Hardware-Sicherheitsmodul in der Form einer Chipkarte beschrieben.

Die Druckschrift EP 0 898 216 A2 offenbart ein Verfahren zur sicheren Übertragung von Steuerkommandos in einem Computernetzwerk. In diesem Verfahren wird für das Steuerkommando, welches einen Index oder Zeitstempel enthält, mittels eines privaten Schlüssels eine digitale Signatur erzeugt, die zusammen mit dem Steuerkommando übermittelt wird.

Das Dokument WO 2009/158086 A2 offenbart ein Kommunikationsverfahren, bei dem zwischen einem ersten Modul und einem zweiten Modul eine Anfrage übertragen wird, welche ein mit einem öffentlichen Schlüssel verschlüsseltes Geheimnis enthält. Das Geheimnis wird mit einem privaten Schlüssel durch das zweite Modul entschlüsselt, woraufhin Authentisierungsdaten von dem zweiten zum ersten Modul übertragen werden. Das entschlüsselte Geheimnis wird dabei zur Erzeugung der Authentisierungsdaten genutzt.

Die Druckschrift D3 DIMITRIOU T.: "A Lightweight RFID Protocol to protect against Traceability and Cloning attacks" beschreibt ein zweiseitiges Authentisierungsverfahren eines Tags und eines Readers mittels RFID-Technologie. Dabei wird die beiderseitige Authentisierung in einem Challenge-Response-Verfahren als Lösungsansatz vorgeschlagen, um Replay-Attacken oder Denial-of-Service-Attacken zu verhindern. Es wird dabei beschrieben, wie die Sicherheit bei einem solchen Challenge-Response-Verfahren erhöht wird, indem sich sowohl das Tag beim Reader als auch der Reader beim Tag authentisiert. Dafür ist eine Schlüsselableitung bei beiden Kommunikationsteilnehmern aus einem gemeinsamen Geheimnis nötig.

Der vorliegenden Erfindung liegt die Aufgabe zugrunde, ein Verfahren zur unidirektionalen Übertragung von Signalen anzugeben, welches sicherer und benutzerfreundlicher als bisher bekannte Verfahren ist.

Diese Aufgabe wird durch ein Verfahren, einen Sender und einen Empfänger mit den Merkmalen der Ansprüche 1, 8 und 10 gelöst. Vorteilhafte Weiterbildungen der Erfindung sind in den abhängigen Ansprüchen angegeben.

Das erfindungsgemäße Verfahren zur Übertragung eines Signals mit einer unidirektionalen Kommunikationsverbindung wird durch ein asymmetrisches Kryptographieverfahren geschützt. Hierzu wird durch einen Sender ein Zählerwert bei einem Sendevorgang inkrementiert. Anschließend wird durch den Sender eine Challenge auf Basis des Zählerwertes und eines von einem Empfänger ausführbaren Steuerkommandos ermittelt und auf Basis der ermittelten Challenge wird wiederum eine Response ermittelt. Die Challenge und die Response werden von dem Sender an den Empfänger übertragen. Erfindungsgemäß werden durch den Sender sowohl die Challenge als auch die zugehörigen Response ermittelt. Auf diese Weise kann ein asymmetrisches Kryptographieverfahren eingesetzt werden, welches üblicherweise für bidirektionale Kommunikationsverbindungen konzipiert wird. Bei dem Zähler handelt es sich z.B. um einen 16 Bit, 32 Bit oder 64 Bit Zähler. Die Response wird mittels eines asymmetrischen kryptographischen Verfahrens wie z.B. RSA, ECC (Elliptic Curve Cryptography) wie z.B. ECC-DSA, oder Diffie-Hellman unter Verwendung eines privaten asymmetrischen Schlüssels ermittelt. Unter Inkrementieren des Zählerwertes wird insbesondere ein erhöhen um den Wert 1 verstanden. Es kann jedoch auch analog ein anderes Rechensystem zugrunde gelegt werden, bei dem z.B. rückwärts gezählt wird (also der Zählerwert um den Wert 1 verringert wird). Entsprechend ist es ebenso möglich, um andere Werte zu erhöhen (z.B. +2, +5, +7) oder um andere Werte zu verringern (z.B. -2, -5, -7). Auch können andere Rechenoperationen verwendet werden, z.B. ein Multiplizieren mit einem Wert (z.B. 2, 3, 5, 7), um den nächsten Zählerwert zu bestimmen. In einer anderen Variante wird als Zählerwert ein Zufallswert verwendet, wobei beim inkrementieren des Zählers ein neuer Zufallswert berechnet wird (z.B. durch eine Pseudozufallszahlenfolgengenerator).

Erfindungsgemäß wird ferner auf Basis der ermittelten Response ein Integritätsschlüssel durch den Sender abgeleitet, und zum Schutz der Integrität der Challenge eine kryptographische Prüfsumme mit dem Integritätsschlüssel über die Challenge ermittelt, wobei die Prüfsumme ebenfalls an den Empfänger übertragen wird. Dies hat die vorteilhafte Wirkung, dass auch die Integrität der Challenge bei der unidirektionalen Übertragung gewährleistet wird. Die kryptographische Prüfsumme kann über die gesamte Challenge oder über einen Teil der Challenge berechnet werden.

In einer Weiterbildung der vorliegenden Erfindung wird die Nachricht umfassend die Challenge mehrmals übertragen, damit auch bei Übertragungsfehlern das Steuerkommando zuverlässig übermittelt wird. Dabei kann der Zählerwert mit jeder Nachricht erhöht werden oder mit jeder wiederholten Übertragung unverändert bleiben. Der Empfänger akzeptiert diesen gleichen Zählerwert, solange mit einer gewissen Häufigkeit Nachrichten mit diesem Zählerwert empfangen werden. Der Empfänger speichert in einer Variante einen Zähler-Referenzwert. Bei Empfang einer Nachricht prüft der Empfänger, ob der dabei verwendete Zählerwert gegenüber dem gespeicherten Zähler-Referenzwert inkrementiert ist. Nur bei einem einfach oder alternativ mehrfach inkrementierten Zählerwert wird ein in der Nachricht codiertes Steuerkommando ausgeführt. Dabei wird der Zähler-Referenzwert auf den in der Nachricht verwendeten Zählerwert gesetzt. Sobald für eine gewisse Zeitspanne keine Steuernachricht mit diesem Zählerwert empfangen wird, wird dieser Zählerwert ungültig. Zudem kann durch den Empfänger überprüft werden, ob das gleiche Steuerkommando mit diesem Zählerwert übertragen wird. Das in der Nachricht codierte Steuerkommando wird dabei für einen konstanten Zählerwert vorzugsweise nur einmal ausgeführt.

In einer weiteren Ausgestaltung der vorliegenden Erfindung speichert zur Initialisierung ein Empfänger eine Identifizierungsinformation eines Senders, wobei die Identifizierungsinformation zumindest eine Seriennummer des Empfängers umfasst. Die Identifizierungsinformation des Senders kann über eine Administrationsschnittstelle, wie beispielsweise eine serielle Schnittstelle, übertragen werden. Vorteilhafterweise kann der Empfänger mit Hilfe der empfangenen Identifizierungsinformation einen öffentlichen Schlüssel des Senders ermitteln. Auf Basis dieses öffentlichen Schlüssels ist es dem Empfänger möglich, eine von dem Sender empfangene Response sicher zu verifizieren. Folglich benötigt der Empfänger in vorteilhafter Weise kein geheimes Schlüsselmaterial, um die Nachrichten des Senders sicher zu überprüfen. Auch wenn ein Angreifer die Identifizierungsinformation oder den öffentlichen Schlüssel des Senders ermitteln würde, könnte er damit jedoch nicht Nachrichten des Senders nachbilden. Dazu würde der dem öffentlichen Schlüssel des Senders zugeordnete private Schlüssel des Senders benötigt.

In dem erfindungsgemäßen Verfahren zur Überprüfung eines derart geschützten übertragenen Signals werden durch einen Empfänger die übertragene Challenge und die zugehörige Response und eine kryptographische Prüfsumme empfangen. Die empfangene Challenge wird daraufhin überprüft, ob der in der Challenge verwendete Zählerwert größer als ein bisher von dem übertragenen Sender gespeicherter Zählerwert ist. Auf der Grundlage der empfangenen Response wird ein Integritätsschlüssel ermittelt, anhand dessen überprüft wird, ob die empfangene Challenge zu der empfangenen Prüfsumme passt. Die empfangene Response wird auf Basis der Challenge überprüft. Nach erfolgreicher Überprüfung von Challenge und Response wird das in der Challenge übermittelte Steuerkommando ausgeführt.

Der erfindungsgemäße Sender weist Mittel zum Durchführen des erfindungsgemäßen Verfahrens zur Übertragung eines Signals mit einer unidirektionalen Kommunikationsverbindung geschützt durch ein asymmetrisches Kryptographieverfahren auf.

In einer Weiterbildung weist der Sender ein Sicherheitsmodul zur effizienten und sicheren Ausführung kryptographischer Operationen auf. Das Sicherheitsmodul umfasst Mittel zum Schutz sowohl gegen softwaretechnische als auch gegen physikalische Angriffe oder Seitenkanalangriffe.

Der erfindungsgemäße Empfänger umfasst Mittel geeignet zum Durchführen eines Verfahrens zur Überprüfung eines unidirektional übertragenen Signals geschützt durch ein asymmetrisches Kryptographieverfahren.

Im Folgenden werden bevorzugte Ausführungsformen des erfindungsgemäßen Verfahrens und des erfindungsgemäßen Senders und Empfängers unter Bezugnahme auf die beigefügten Figuren zur Erläuterung erfindungswesentlicher Merkmale beschrieben. Es zeigen
- Figur 1: ein Ablaufdiagramm eines Verfahrens zur sicheren unidirektionalen Übertragung eines Signals,
- Figur 2: ein Ablaufdiagramm einer Variante mit einem Sicherheitsmodul eines Verfahrens zur sicheren unidirektionalen Übertragung eines Signals,
- Figur 3: ein Ablaufdiagramm einer Variante mit einem zusätzlichen Integritätsschutz der übertragenen Challenge eines erfindungsgemäßen Verfahrens zur sicheren unidirektionalen Übertragung eines Signals.

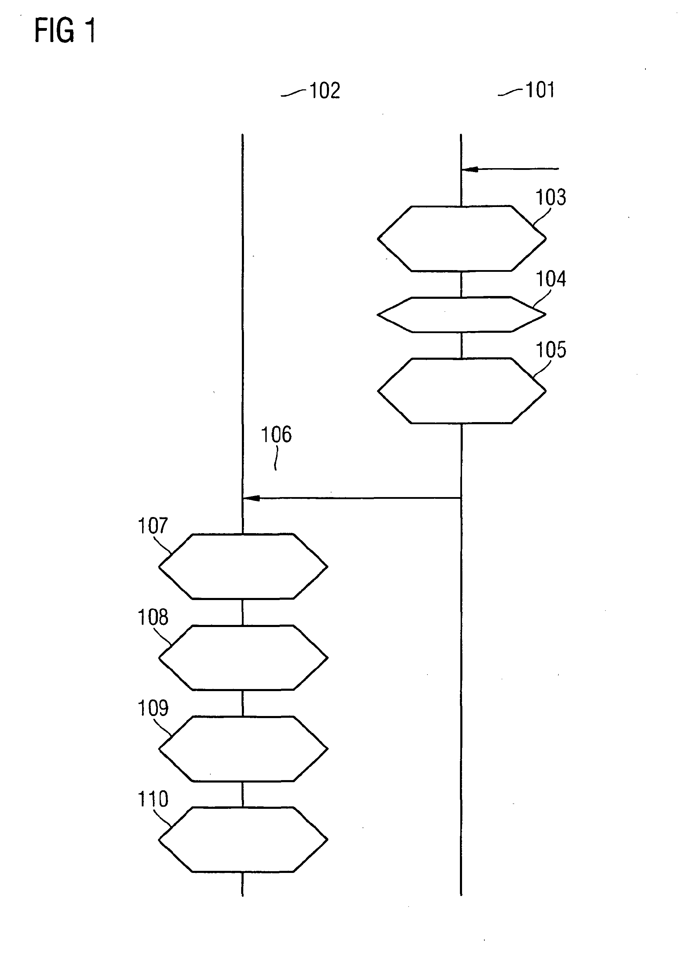

Die Figur 1 zeigt in einem Ablaufdiagramm ein Verfahren zur sicheren Übertragung eines Signals. Die Übertragung erfolgt hierbei nur in eine Richtung, also unidirektional, von einem Sender 101 zu einem Empfänger 102.

Der Sender 101 ermittelt in einem ersten Schritt 103 eine Challenge, welche einen Zählerwert und ein Steuerkommando umfasst. Der Zählerwert wird bei jedem Sendevorgang inkrementiert und dient zur Verhinderung von Replayattacken, bei denen eine abgehörte Nachricht durch einen Angreifer gesendet wird. Das Steuerkommando ist beispielsweise bei einer Fernbedienung für einen Fernseher ein Kommando zum Ein- oder Ausschalten des Gerätes oder ein Kommando zum Verändern der Lautstärke. Bei drahtlosen Sensoren ist das Steuerkommando beispielsweise ein Sensorwert wie Temperatur oder Druck.

Im nächsten Schritt 104 wird der Zählerwert des Senders inkrementiert. Anschließend ermittelt der Sender 101 auf Basis der ermittelten Challenge eine Response 105. Die ermittelte Challenge sowie die ermittelte Response werden anschließend vom Sender 101 an den Empfänger 102 übertragen 106.

Der Empfänger 102 überprüft nun in einem ersten Schritt 107, ob die erhaltene Response zur erhaltenen Challenge passt. In einem nächsten Schritt überprüft der Sender 102, ob die erhaltene Challenge gültig ist 108. Hierbei wird beispielsweise geprüft, ob der von der Challenge umfasste Zählerwert des Senders größer ist als der bisher von diesem Sender empfangene Zählerwert. Ist sowohl die Überprüfung der Response als auch die Überprüfung der Challenge erfolgreich, wird die im Empfänger 102 hinterlegte Referenzinformation des Senders 101 angepasst 109. Dazu wird beispielsweise der für diesen Sender gespeicherte Zählerwert inkrementiert. Schließlich wird das von der Challenge umfasste Steuerkommando ausgeführt 110.

Sollte die Überprüfung der Response oder der Challenge jedoch erfolglos sein, wird die Referenzinformation des betreffenden Senders nicht angepasst und das entsprechende Steuerkommando nicht ausgeführt.

Es liegt selbstverständlich im Ermessen eines Fachmanns, die dargestellten Verfahrensschritte in einer anderen Reihenfolge oder zumindest teilweise parallel durchzuführen.

Die Sicherheit von asymmetrischen Kryptographieverfahren basiert auf der Verwendung eines privaten und eines öffentlichen Schlüssels. Der private, geheime Schlüssel steht dabei nur dem Prüfling zur Verfügung, während der öffentliche Schlüssel im Prinzip jedermann zugänglich sein kann. In dem beschriebenen Verfahren basiert die Sicherheit also darauf, dass die Response aus der Challenge lediglich mit Kenntnis des privaten Schlüssels ermittelt werden kann. Kenntnis von dem privaten Schlüssel hat jedoch nur der Sender. Mit dem öffentlichen Schlüssel hingegen kann lediglich überprüft werden, ob eine Response zu einer Challenge passt und somit der Sender Kenntnis von dem privaten Schlüssel hatte. Mit dem öffentlichen Schlüssel ist es jedoch nicht möglich, auf Basis einer Challenge eine dazugehörige Response zu ermitteln. Daher wäre es völlig unproblematisch, wenn der im Besitz des Empfängers befindliche öffentliche Schlüssel durch einen Angreifer ermittelt würde.

In einer weiteren Ausgestaltung wird die Nachricht umfassend die Challenge mehrmals übertragen, damit auch bei Übertragungsfehlern das Steuerkommando zuverlässig vom Empfänger erkannt werden kann. Dabei kann der Zählerwert mit jeder Nachricht erhöht werden oder beim wiederholten Senden der Nachricht unverändert bleiben.

Beim wiederholten Senden einer Nachricht mit unverändertem Zählerwert akzeptiert der Empfänger diesen gleichen Zählerwert, solange mit einer gewissen vorgebbaren Häufigkeit Nachrichten mit diesem Zählerwert empfangen werden. Sobald für eine vorgebbare Zeitspanne keine Nachricht mit diesem Zählerwert empfangen wird, wird dieser Zählerwert ungültig. Zusätzlich kann überprüft werden, ob das gleiche Steuerkommando mit diesem Zählerwert übertragen wird.

Um einen Empfänger mit einem Sender vertraut zu machen, wird in einer Anlernphase eine Identifizierungsinformation des Senders an den Empfänger übermittelt. Die Identifizierungsinformation ist beispielsweise eine Seriennummer, ein digitales Zertifikat umfassend den öffentlichen Schlüssel oder der öffentliche Schlüssel selbst.

Die Identifizierungsinformation des Senders kann beim Anlernen über eine Administrationsschnittstelle, beispielsweise über einen Personalcomputer mit einer seriellen Schnittstelle, eingegeben werden. In einem automatisierten Anlernverfahren wird der Empfänger in einen Anlernmodus versetzt und speichert in diesem Zeitraum Identifizierungsinformationen derjenigen Sender, die ein Steuerkommando übertragen. Zum Initiieren des Anlernmodus dient beispielsweise eine spezielle Taste oder ein mechanischer Schlüsselschalter am Empfänger.

Die Identifizierungsinformation des Senders wird vom Empfänger direkt abgespeichert oder erst nach einer Gültigkeitsprüfung, beispielsweise eines digitalen Zertifikats.

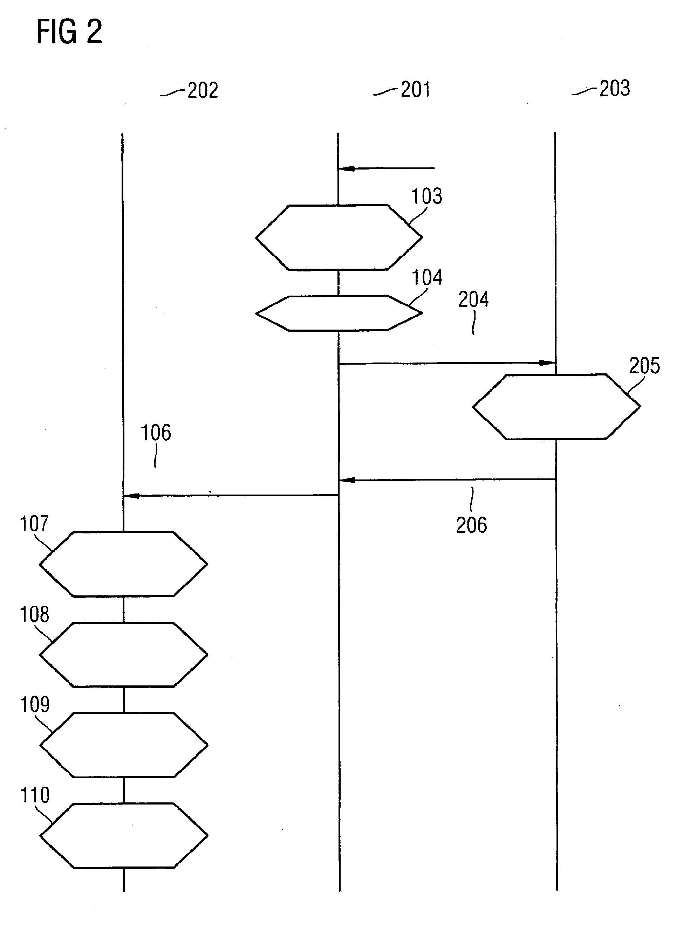

Die Figur 2 zeigt in einem Ablaufdiagramm ein Verfahren zur sicheren Übertragung eines Signals mit einem Sicherheitsmodul. Die Übertragung erfolgt hierbei nur in eine Richtung, also unidirektional, von einem Sender 201 zu einem Empfänger 202.

Zur Vermeidung von Wiederholungen wird im Folgenden bei gleichen Verfahrensschritten in der Figur 2 auf die entsprechen den Beschreibungsteile in der Figur 1 verwiesen. Zur Kennzeichnung sind gleiche Verfahrensschritte in Figur 2 mit den gleichen Bezugszeichen wie in Figur 1 versehen.

Im Unterschied zu dem in Figur 1 gezeigten Verfahren wird in dem Verfahren gemäß Figur 2 zur Ermittlung der Response im Sender ein Sicherheitsmodul 203 verwendet. Das Sicherheitsmodul 203 ist zur effizienten und sicheren Ausführung kryptographischer Operationen ausgelegt und weist Mittel zum Schutz sowohl gegen softwaretechnische als auch gegen physikalische Angriffe oder Seitenkanalangriffe auf.

Hierzu wird nach einer Inkrementierung des Zählerwertes 104 die ermittelte Challenge dem Sicherheitsmodul 203 zur Verfügung gestellt. Anschließend ermittelt das Sicherheitsmodul 203 des Senders 201 auf Basis der ermittelten Challenge eine Response 205. Die ermittelte Response wird wiederum durch das Sicherheitsmodul 203 dem Sender zur Verfügung gestellt 206. Die ermittelte Challenge sowie die ermittelte Response werden schließlich vom Sender 201 an den Empfänger 202 übertragen 106. Der übrige Verfahrenablauf entspricht dann wieder dem aus Figur 1 bekannten Verfahrensablauf. Es ist auch möglich, das Sicherheitsmodul mit einem entsprechenden Zählerwert zu initialisieren und die Inkrementierung direkt im Sicherheitsmodul vorzunehmen. Die hat den Vorteil, dass der Zählerwert nicht manipuliert werden kann.

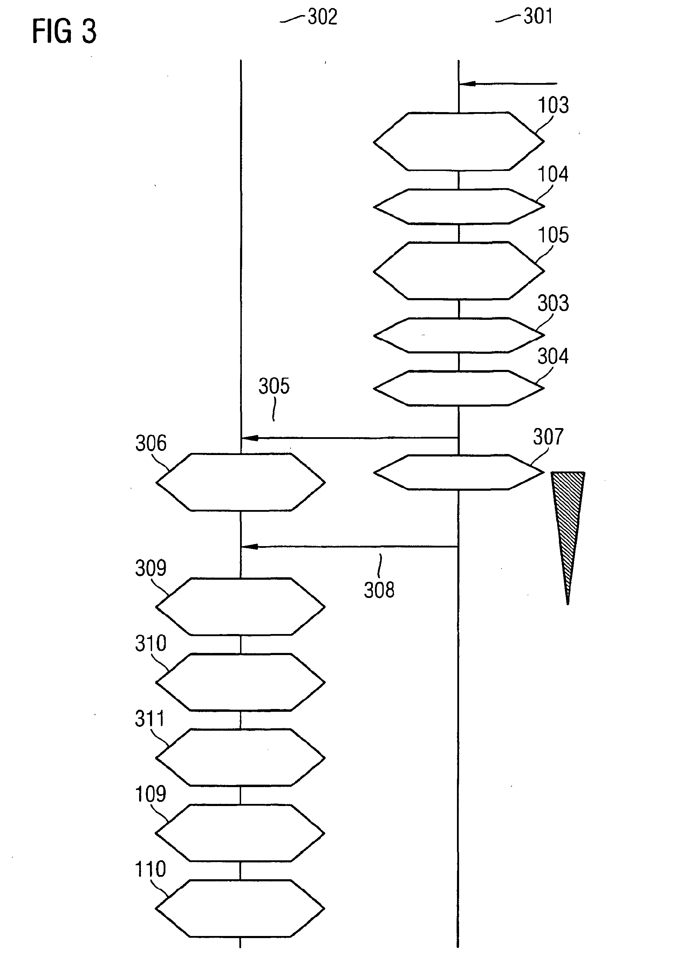

Die Figur 3 zeigt in einem Ablaufdiagramm ein erfindungsgemäßes Verfahren zur sicheren Übertragung eines Signals mit einem zusätzlichen Integritätsschutz für die übertragene Challenge. Die Übertragung erfolgt hierbei nur in eine Richtung, also unidirektional, von einem Sender 301 zu einem Empfänger 302.

Zur Vermeidung von Wiederholungen wird im Folgenden bei gleichen Verfahrensschritten in der Figur 3 auf die entsprechenden Beschreibungsteile in der Figur 1 verwiesen. Zur Kennzeichnung sind gleiche Verfahrensschritte in Figur 3 mit den gleichen Bezugszeichen wie in Figur 1 versehen.

In dieser Ausgestaltung des erfindungsgemäßen Verfahrens wird die Challenge unter Verwendung des Responsewertes geschützt übertragen. Dazu wird aus dem Responsewert ein symmetrischer Schlüssel abgeleitet oder der Responsewert direkt als symmetrischer Schlüssel verwendet 303. Die Ableitung kann dabei beispielsweise durch eine Hashfunktion erfolgen. Mit diesem ermittelten symmetrischen Schlüssel wird eine kryptographische Prüfsumme berechnet 304, welche den Zählerwert und das Steuerkommando umfasst. Beispiele für eine Hashfunktion sind MD6, SHA-1, SHA-256. Die Prüfsumme kann z.B. mittels einer HMAC-MD5, HMAC-SHA1, HMAC256, oder AES-CBC-MAC Funktion berechnet werden.

Die Challenge und die Prüfsumme werden durch den Sender an den Empfänger übermittelt 305. Der Empfänger speichert nun die Challenge samt Prüfsumme und ermittelt ein Zeitfenster für einen gültigen Empfangszeitraum der zugehörigen Response 306. Der Sender 301 startet eine Zeitmessung 307 und übermittelt die Response an den Empfänger in dem gültigen Zeitfenster 308. Um die Sicherheit weiter zu erhöhen, wird also in diesem Ausführungsbeispiel zuerst die Challenge und Prüfsumme gesendet und erst zu einem späteren Zeitpunkt die Response.

Der Empfänger 302 überprüft nun in einem ersten Schritt 309, ob die erhaltene Challenge gültig ist. Hierbei wird beispielsweise geprüft, ob der von der Challenge umfasste Zählerwert des Senders größer ist als der bisher von diesem Sender empfangene Zählerwert. Weiterhin ermittelt der Empfänger 302 nun seinerseits auf Grundlage der erhaltenen Response den symmetrischen Schlüssel. Hiernach überprüft der Empfänger anhand des symmetrischen Schlüssels ob die empfangene Challenge zu der empfangenen Prüfsumme passt.

Dann überprüft der Empfänger, ob die erhaltene Response zur Challenge passt 310. Schließlich überprüft der Empfänger zusätzlich, ob die Response in dem gültigen Zeitfenster empfangen wurde. Der übrige Verfahrenablauf entspricht dann wieder dem aus Figur 1 bekannten Verfahrensablauf.

Es liegt selbstverständlich im Ermessen eines Fachmanns, die dargestellten Verfahrensschritte in einer anderen Reihenfolge oder zumindest teilweise parallel durchzuführen.

Anwendungsfälle für die beschriebene Erfindung sind beispielsweise Bluetooth-Fußschalter für Medizingeräte, Garagentoröffner, Funkschlüssel für einen Gebäude- oder Fahrzeugzugang, Steuerung im Heimnetz (bspw. Jalousie- oder Lichtschalter).

## Patentansprüche

1. Verfahren zur Übertragung eines Signals mit einer unidirektionalen Kommunikationsverbindung geschützt durch ein asymmetrisches Kryptographieverfahren, wobei ein Sender (101, 201, 301) die folgenden Schritte ausführt:
- ein Zählerwert wird bei einem Sendevorgang inkrementiert,
- eine Challenge (C) wird auf Basis des Zählerwertes und eines von einem Empfänger ausführbaren Steuerkommandos ermittelt,
- eine Response (R) wird auf Basis der ermittelten Challenge (C) ermittelt,
- auf Basis der ermittelten Response (R) wird ein Integritätsschlüssel abgeleitet, und zum Schutz der Integrität der Challenge (C) wird eine kryptographische Prüfsumme (MAC) mit dem Integritätsschlüssel über die Challenge (C) ermittelt,
- die Challenge (C), die kryptographische Prüfsumme und die Response (R) werden an den Empfänger (102, 202, 302) übertragen.

2. Verfahren nach Anspruch 1, wobei zur Erkennung von Übertragungsfehlern die Challenge (C) wiederholt übertragen wird.

3. Verfahren nach Anspruch 2, wobei der Zählerwert mit jedem Senden der Challenge (C) innerhalb der wiederholten Übertragung erhöht wird.

4. Verfahren nach Anspruch 2, wobei der Zählerwert innerhalb der wiederholten Übertragung unverändert bleibt.

5. Verfahren nach Anspruch 1, wobei zur Initialisierung ein Empfänger (102, 202, 302) eine Identifizierungsinformation eines Senders (101, 201, 301) speichert,
und die Identifizierungsinformation zumindest eine Seriennummer des Senders (101, 201, 301) umfasst.

6. Verfahren nach Anspruch 5, wobei die Identifizierungsinformation ein digitales Zertifikat oder einen öffentlichen Schlüssel des Senders (101, 201, 301) umfasst.

7. Verfahren zur Überprüfung eines gemäß einem Verfahren nach den Ansprüchen 1 bis 6 übertragenen Signals, wobei ein Empfänger (102, 202, 302) die folgenden Schritte ausführt:
- eine durch einen Sender (101, 201, 301) übertragene Challenge (C) und eine zugehörige Response (R) und eine kryptographische Prüfsumme werden empfangen,
- die empfangene Challenge (C) wird daraufhin überprüft, ob der in der Challenge (C) verwendete Zählerwert größer als ein bisher von dem übertragenden Sender (101, 201, 301) gespeicherter Zählerwert ist,
- auf der Grundlage der empfangenen Response (R) wird ein Integritätsschlüssel ermittelt, anhand dessen überprüft wird, ob die empfangene Challenge zu der empfangenen Prüfsumme passt,
- die empfangene Response (R) wird auf Basis der überprüften Challenge (C) überprüft,
- nach erfolgreicher Überprüfung von Challenge (C) und Response (R) wird das in der Challenge (C) verwendete Steuerkommando ausgeführt.

8. Sender umfassend Mittel geeignet zum Durchführen eines Verfahrens nach den Ansprüchen 1 - 6.

9. Sender nach Anspruch 8, wobei der Sender (101, 201, 301) ein Sicherheitsmodul (203) aufweist.

10. Empfänger umfassend Mittel geeignet zum Durchführen eines Verfahrens nach Anspruch 7.

## Claims

1. Method for the transmission of a signal with a unidirectional communications link, protected by an asymmetric cryptography method, wherein a transmitter (101, 201, 301) carries out the following steps:
- A counter value is incremented in a transmission procedure,
- A challenge (C) is determined on the basis of the counter value and a control command executable by a receiver,
- A response (R) is determined on the basis of the challenge (C) determined,
- An integrity key is derived on the basis of the response (R) determined, and, to protect the integrity of the challenge (C), a cryptographic check sum (MAC) is determined with the integrity key via the challenge (C),
- The challenge (C), the cryptographic check sum and the response (R) are transmitted to the receiver (102, 202, 302).

2. Method according to claim 1, wherein the challenge (C) is repeatedly transmitted in order to identify transmission errors.

3. Method according to claim 2, wherein the counter value is increased with each transmission of the challenge (C) within the repeated transmission.

4. Method according to claim 2, wherein the counter value remains unchanged within the repeated transmission.

5. Method according to claim 1, wherein, for the initialising, a receiver (102, 202, 302) stores an item of identification information of a transmitter (101, 201, 301), and the identification information comprises at least one serial number of the transmitter (101, 201, 301).

6. Method according to claim 5, wherein the identification information comprises a digital certificate or a public key of the transmitter (101, 201, 301).

7. Method for checking a signal transmitted in accordance with a method according to claims 1 to 6, wherein a receiver (102, 202, 302) carries out the following steps:
- A challenge (C) transmitted by a transmitter (101, 201, 301) and a response (R) pertaining to it and a cryptographic check sum are received,
- The challenge (C) received is then checked to determine whether the counter value used in the challenge (C) is greater than a counter value previously stored by the transmitting transmitter (101, 201, 301),
- An integrity key is determined on the basis of the response (R) received and is used to check whether the challenge received matches the check sum received,
- The response (R) received is checked on the basis of the checked challenge (C),
- Following successful checking of the challenge (C) and response (R), the control command used in the challenge (C) is executed.

8. Transmitter comprising means suitable for carrying out a method according to claims 1 - 6.

9. Transmitter according to claim 8, wherein the transmitter (101, 201, 301) has a security module (203).

10. Receiver comprising means suitable for carrying out a method according to claim 7.

## Revendications

1. Procédé de transmission d'un signal par une liaison de communication unidirectionnelle protégée par un procédé cryptographique asymétrique, un émetteur (101, 201, 301) exécutant les étapes suivantes :
- une valeur de compteur est incrémentée lors d'une opération d'émission ;
- un challenge (C) est déterminé sur la base de la valeur de compteur et d'un ordre de commande exécutable par un récepteur ;
- une réponse (R) est déterminée sur la base du challenge (C) déterminé ;
- une clé d'intégrité est dérivée sur la base de la réponse déterminée (R) et, pour protéger l'intégrité du challenge (C), une somme de contrôle cryptographique (MAC) est déterminée au moyen de la clé d'intégrité via le challenge (C) ;
- le challenge (C), la somme de contrôle cryptographique et la réponse (R) sont transmis au récepteur (102, 202, 302).

2. Procédé selon la revendication 1, le challenge (C) étant transmis répétitivement pour identifier des erreurs de transmission.

3. Procédé selon la revendication 2, la valeur de compteur étant augmentée à chaque émission du challenge (C) dans le cadre de la transmission répétée.

4. Procédé selon la revendication 2, la valeur de compteur restant inchangée dans le cadre de la transmission répétée.

5. Procédé selon la revendication 1, un récepteur (102, 202, 302) sauvegardant une information d'identification d'un émetteur (101, 201, 301) aux fins de l'initialisation et l'information d'identification comprenant au moins un numéro de série de l'émetteur (101, 201, 301).

6. Procédé selon la revendication 5, l'information d'identification comprenant un certificat numérique ou une clé publique de l'émetteur (101, 201, 301).

7. Procédé de vérification d'un signal transmis conformément à un procédé selon les revendications 1 à 6, un récepteur (102, 202, 302) exécutant les étapes suivantes :
- un challenge (C) transmis par un émetteur (101, 201, 301) et une réponse associée (R) et une somme de contrôle cryptographique sont reçus ;
- le challenge reçu (C) est ensuite vérifié pour établir si la valeur de compteur utilisée dans le challenge (C) est supérieure à une valeur de compteur stockée jusqu'à présent par l'émetteur de transmission (101, 201, 301) ;
- sur la base de la réponse reçue (R) est déterminée une clé d'intégrité à l'aide de laquelle il est vérifié si le challenge reçu correspond à la somme de contrôle reçue ;
- la réponse reçue (R) est vérifiée sur la base du challenge vérifié (C) ;
- après la vérification réussie du challenge (C) et de la réponse (R), l'ordre de commande utilisé dans le challenge (C) est exécuté.

8. Émetteur comprenant des moyens appropriés pour exécuter un procédé selon les revendications 1 à 6.

9. Émetteur selon la revendication 8, l'émetteur (101, 201, 301) comportant un module de sécurité (203).

10. Récepteur comprenant des moyens appropriés pour exécuter un procédé selon la revendication 7.
